# EUROPEAN PATENT APPLICATION

(11) **EP 4 672 559 A1**
(43) Date of publication of application: **31.12.2025**
(21) Application number: 24184076.8
(22) Date of filing: 24.06.2024
(51) Int. Cl.: H02K 1/14, H02K 1/18, H02K 3/34, H02K 15/02, H02K 15/10, H02K 21/24, H02K 3/46

(54) **COIL CLAMPING SOLUTION FOR AN AXIAL FLUX MACHINE**

(71) Applicant: Magnax, 8500 Kortrijk (BE)
(72) Inventor: Leijnen, Peter, 8500 Kortrijk (BE)
(74) Representative: De Clercq & Partners

(57) **Abstract**

Method for assembling a stator (1200) of an axial flux machine, the method comprising composing multiple stator elements (800), wherein composing a stator element (800) comprises:
- providing a coil (600);
- providing one or more core parts (510, 520), any of the one or more core parts (510, 520) being tapered at least over a portion of the length;
- providing a core sleeve (100), the core sleeve (100) being expandable;
- positioning the core sleeve (100) inside the coil (600);
- for each of the one or more core parts (510, 520): inserting the core part (510) into the core sleeve (100), thereby expanding the core sleeve (100) and pressing the sleeve wall (106) against the coil (600),
such that after inserting the one or more core parts (510, 520), the coil (600) is clamped by the expanded core sleeve (100).

## Description

### Field of the Invention

The present invention generally relates to the field of axial flux machines. In particular, an assembly method for a stator of an axial flux machine is presented, allowing to robustly and reliably fix the coils in the stator, while obtaining an improved cooling efficiency.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. Typically, each of the stator coils is wound around a core made of ferromagnetic material, to direct and focus the magnetic flux. During motor operation, the rotor is driven by magnetic fields generated by the stator currents, while in generator condition currents are induced in the stator coils due to the rotation of the rotor. Different topologies are known for axial flux machines, for example comprising one rotor disk and one stator disk, one rotor disk and two stator disks, or two rotor disks positioned on both sides of a stator disk. The axial flux machine may be of the torus type, having a stator yoke, or may be of the yokeless type, not having a stator yoke.

When the axial flux machine operates, a voltage difference arises between the coils of the machine and the respective cores around which the coils are wound. Therefore, to prevent that electrical current may flow between the winding and the core, the coils must be electrically isolated from the cores. For this purpose, typically an insulating layer is placed between the coils and respective cores, also referred to as a core sleeve. In solutions known in the prior art, the insulating layer or core sleeve is made of an electrically insulating sheet that is wrapped around the core, for example a sheet of Nomex paper.

Cooling of the stator may be done in various ways. For example, the stator may be liquid-cooled, wherein a cooling liquid is circulated inside a cavity of the stator housing and flows between adjacent coils, thereby directly submerging the coils in the cooling liquid. Examples of such a liquid-cooled stator are for example found in WO2010/092400A2 or EP3764526A1. These prior art solutions make use of a so-called clamshell design, referring to the stator housing being composed of two opposite clamshells or a clamshell covered with a lid.

In a clamshell design like e.g. used in EP3764526A1, the coils are not completely fixed or constrained inside the clamshell. This is a consequence of the assembly tolerances that are required between the coil and the core sleeve and between the coil and the clamshell. Indeed, when composing stator elements during assembly of the stator, the sleeve needs to be placed over the core, and the coil needs to be placed over the sleeve, without causing any damage to the sleeve or coil. Accordingly, the coil sits somewhat loose inside the clamshell, which allows the coil to slightly move or vibrate due to the electromagnetic forces that act on the coil, or due to mechanical vibration of the motor. This movement or vibration may cause the coil to rub against the core sleeve or against the clamshell, which may damage the enamel coating of the copper wire through abrasion.

In WO2010/092400, the coils are impregnated with a resin, wherein the resin fixes the coils such that they cannot vibrate or move. Also in WO2018/015293A1 any remaining empty spaces in the stator housing are filled with a filler material like a resin, and in US2014/009009A1 stator cores are moulded by a resin. While the resin prevents that coils may vibrate or move, a disadvantage is that it fills up the coil and seals any gaps between the turns of the winding, thereby completely blocking the cooling fluid from flowing through the winding. As the cooling fluid is prevented from reaching the cores or flowing in the vicinity of the cores, this results in a much less effective cooling of the winding. Finally, due to the hardened resin, the various parts of a stator element cannot be disassembled afterwards, such that no recycling is possible.

It is an objective of the present invention to disclose an assembly method for a stator of an axial flux machine, that resolves one or more of the above-described shortcomings of the prior art solutions. More particularly, it is an objective to present a stator assembly method, that allows to robustly and reliably fix the coils in the stator, while obtaining an improved cooling efficiency.

### Summary of the Invention

According to a first aspect of the present invention, the above identified objectives are realized by a method for assembling a stator of an axial flux machine defined by claim 1, the method comprising composing multiple stator elements,
wherein composing a stator element comprises:
   - providing a coil, the coil having a central axis according to a longitudinal direction;
   - providing one or more core parts, adapted for composing a ferromagnetic core, wherein any of the one or more core parts extends according to a longitudinal direction between a top side and bottom side;
   - providing a core sleeve, the core sleeve comprising a sleeve wall enclosing an internal space, the sleeve wall extending according to a longitudinal direction,
wherein the longitudinal direction of the coil, of the sleeve and of the one or more core parts corresponds to the axial direction of the machine when mounted, and wherein:
   - any of the one or more core parts is tapered, wherein, starting from the bottom side, the transverse cross section of the core part continuously increases towards the top side, at least over a portion of the length of the core part;
   - the core sleeve is expandable, such that the sleeve wall allows for an expansion wherein the transverse cross section of the enclosed internal space is enlarged, at least over a portion of the length of the core sleeve,
and composing the stator element further comprises:
   - positioning the coil and the core sleeve, wherein the core sleeve is placed inside the coil;
   - for each of the one or more core parts: inserting the core part with its bottom side into the internal space of the core sleeve, wherein one or more lateral faces of the core part engage with the sleeve wall during insertion, thereby expanding the core sleeve and pressing the sleeve wall against the coil,
such that after inserting the one or more core parts, the coil is clamped by the expanded core sleeve.

Thus, the invention concerns a method for assembling a stator of an axial flux machine. The latter may equally be referred to as, for example, an axial air-gap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. The rotor comprises magnetic material, typically permanent magnets, generating an axial magnetic flux. During operation, the stator remains stationary, while the rotor, being mounted on the shaft, rotates during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk. The axial flux machine may be of the torus type, having a stator yoke, or may be of the YASA type, not having a stator yoke. The latter machine is also referred to as, for example, a yokeless and segmented armature (YASA) motor or generator, or simply a yokeless axial flux machine.

The stator comprises a plurality of stator elements, of which the arrangement is typically rotationally symmetrical with respect to the central axis. Every stator element comprises a coil, and a core made of ferromagnetic material, each stator element having a central axis in axial direction. A coil comprises a plurality of turns, wound around the ferromagnetic core. During motor operation, the rotor is driven by magnetic fields generated by stator currents running in the coils, while in generator condition currents are induced in the stator coils due to the rotation of the rotor. In an embodiment, each of the cores may comprise an elongated central part, e.g. referred to as core bar, and pole shoes, positioned at both opposite ends of the core bar. In another embodiment, no such pole shoes are present.

Every stator element comprises a core sleeve, placed between the core and the coil in assembled condition of the stator. A sleeve refers to a hollow structure, wherein the core is placed inside the hollow sleeve. When mounted, the sleeve is thus positioned around the core, and the coil is positioned around the sleeve.

The method for assembling the stator comprises composing multiple stator elements. For each of the stator elements, composing the stator element comprises providing a coil, providing one or more core parts, and providing a core sleeve. The coil has a central axis according to a longitudinal direction, which in assembled condition of the stator corresponds to the axial direction of the machine.

The one or more core parts are adapted for together composing a ferromagnetic core. For example, two core parts are provided, wherein each core part comprises half of a core bar and a pole shoe. In another example, a single core part is provided per stator element, which in itself forms the ferromagnetic core. In yet another example, more than two core parts are provided per stator element, e.g. three core parts being provided as a core bar, a first pole shoe, and a second pole shoe. Every core part extends according to a longitudinal direction, which in composed condition of the ferromagnetic core and in assembled condition of the stator corresponds to the axial direction of the machine. Every core part extends in longitudinal direction between a top side and a bottom side, wherein in composed condition of the core, the top side of a core part corresponds to one of the end faces of the core. In an example wherein two core parts are provided per stator element, the top side of a respective core part e.g. corresponds to the end face of the pole shoe, while the bottom side of the two core parts corresponds to their respective sides that will be in contact after composing the core.

Besides the top and bottom face, a core part typically comprises four lateral faces. Herein, the lateral face directed to the inner circumference of the stator, in assembled condition of the stator, is referred to as the first face. The lateral face directed to the outer circumference of the stator, in assembled condition of the stator, is referred to as the third face. The lateral faces each directed to an adjacent element, are referred to as the second and fourth face respectively. The mutual distance between the second and fourth face is referred to as the width of the core part, and the mutual distance between the first and third face is referred to as the depth of the core part. The length of a core part, or of the composed core, is measured according to the longitudinal direction.

Any of the core parts is tapered, wherein, starting from the bottom side, the area of a transverse cross section continuously increases towards the top side, at least over a portion of the length of the core part. The tapering may be established in various ways; e.g. all of the lateral faces may be inclined with respect to the longitudinal direction, two of the lateral faces may be inclined with respect to the longitudinal direction, etc. The tapering may be implemented in the ferromagnetic core material, or may be obtained by means of an additional layer applied to the ferromagnetic material. In an embodiment, two core parts art provided per stator element, each of them being tapered. This e.g. implies that in composed condition of the ferromagnetic core, across the length of the core, the transverse cross section of the core bar, first decreases towards the middle of the core bar, and next increases away from the middle of the core bar. If pole shoes are attached to the core bar, typically there is a discontinuous increase of the transverse cross section at the position where the pole shoe is attached to the core bar. In another embodiment, a single core part is provided per stator element, the core part having a continuously increasing cross section from the bottom side towards the top side, e.g. over the whole length of the core part.

The core sleeve comprises a sleeve wall enclosing an internal space, thereby forming a hollow sleeve. The sleeve wall extends according to a longitudinal direction, corresponding to the axial direction in assembled condition of the machine. The sleeve wall may comprise a front part, a back part and two opposite side parts, wherein in mounted condition of the machine, the front part respectively back part is directed to the inner respectively outer circumference of the stator, and the first and second side part each are directed to an adjacent stator element. The mutual distance between the side parts of the sleeve wall is referred to as the width of the sleeve, and the mutual distance between the front and back part of the sleeve wall is referred to as the depth of the sleeve. The length of the sleeve is measured according to the longitudinal direction.

The core sleeve is expandable, in such a way that the sleeve wall allows for an expansion wherein the transverse cross section of the enclosed internal space is enlarged, at least over a portion of the length of the core sleeve. Typically, the expansion is such that, for any transverse section over the length of the sleeve, the area of the enclosed space is enlarged during the expansion. The expansion may also be referred to as a transverse expansion, or an expansion in transverse direction, opposed to an expansion in longitudinal direction. Typically, the expansion implies that at least some parts or points of the sleeve wall are displaced in transverse direction. For example, the enclosed internal space may be enlarged during the expansion due to the mutual distance between opposite sleeve wall parts being increased, for at least one pair of opposite sleeve wall parts, i.e. the mutual distance between the front and back part of the sleeve wall is increased, thereby enlarging the depth of the sleeve, and/or the mutual distance between the side parts is increased, thereby enlarging the width of the sleeve.

Various embodiments are possible to implement the expandable sleeve. In an embodiment, the sleeve is expandable due to the specific material of the sleeve wall or portions thereof. For example, the sleeve wall, or portions thereof, may be elastic or resilient, such that material of the sleeve wall is stretched or elastically deformed during the expansion. In another example, the sleeve wall, or portions thereof, are deformable, such that the material of the sleeve wall is plastically deformed during the expansion. In another embodiment, the sleeve is expandable due to the specific design or layout of the sleeve wall. For example, the sleeve wall, or portions thereof, may have a rippled, waved or corrugated shape, which is flattened during the expansion. In another example, the sleeve wall comprises one or more folded portions, which are unfolded during the expansion. In yet another example, the sleeve wall comprises one or more stacked portions, wherein overlapping edges slide with respect to each other during the expansion. Also combinations of the aforementioned embodiments and examples are possible, e.g. wherein the sleeve wall comprises a resilient portion as well as a stacked portion.

For each of the stator elements, composing a stator element further comprises positioning the coil and the core sleeve, wherein the core sleeve is placed inside the coil. The coil may first be placed, after which the sleeve is inserted, or the sleeve may first be placed, after which the coil is placed over it. After positioning the coil and sleeve, a core part is inserted into the internal space of the core sleeve. Insertion is such that first the bottom side of the core part enters the internal space of the sleeve. If multiple core parts are provided to compose a core, each of the core parts is inserted with their respective bottom sides. For example, if two core parts are provided, the first core part may be inserted via one side of the coil, while the other core part is inserted via the other side of the coil.

While inserting a core part into the internal space of the sleeve, one or more lateral faces of the core part engage with the sleeve wall, thereby expanding the core sleeve and pressing the sleeve wall against the coil. This means that the dimensions of the core part(s), sleeve and coil, and the expandable character of the sleeve are such that inserting the core part causes the sleeve wall to be expanded. Moreover, the occurring expansion is such that the sleeve wall is pressed against the coil. As a result, after inserting the one or more core parts, the coil is clamped by the expanded core sleeve. This means that the occurred expansion is such that a clamping connection is established between the sleeve wall and the coil, wherein friction between both holds the coil in place.

The invention goes along with multiple advantages. Firstly, as the coil is clamped by the expanded sleeve, the coil is fixed in place relative to the sleeve. A clamping connection similar to a friction fit is thus established, but still allowing for the necessary clearances between the sleeve and the coil during assembly, thereby avoiding damage to the coil or sleeve. Moreover, due to the tapering of the core part(s), an easy and damage-free insertion of the core part(s) into the sleeve is possible. As the core engages with the sleeve, the sleeve is also fixed in place relative to the core. Therefore, when the cores are fixed with respect to the clamshell, the coils are prevented from vibrating or moving inside the clamshell. In this way, damage to the enamel coating of the copper wire of the coil through abrasion is prevented.

Furthermore, the method allows to fix all parts of the stator elements without relying on impregnation with a resin. As a result, the cooling fluid flowing between the stator elements is not blocked from flowing through the coils or prevented from flowing in the vicinity of the cores, thereby obtaining an improved cooling efficiency then when a resin is used. Finally, as a purely mechanical connection is formed to fix the components of a stator element, the various parts of the stator element may be disassembled at a later time, thus allowing for recycling.

Optionally, the sleeve wall is at least partially elastic or resilient, thereby allowing for the expansion of the core sleeve when inserting the core part. Thus, the core sleeve is expandable, due to the sleeve wall comprising an elastic material, and/or a resilient element and/or a spring. The complete sleeve wall may be elastic or resilient, or only a single or multiple portions may be elastic or resilient, the latter portions being separated from one another. Accordingly, at least a portion of the sleeve wall is stretched during the expansion, while it is tending to recover its original shape.

Optionally, the sleeve wall comprises one or more resilient portions, of which the shape according to a transverse section is rippled, the rippled resilient portion acting as a wave spring during insertion of the core part. The resilient material and waved shape allow the sleeve wall portion to be expanded, wherein the resilient portion is tending to recover its original shape due to spring force.

Optionally, the sleeve wall comprises one or more folded or stacked portions, thereby allowing for the expansion of the core sleeve when inserting the core part. A folded portion refers to a sleeve wall part wherein one or more folds are present, e.g. a zigzag fold or an accordion fold. During expansion of the sleeve wall, the folded portions are completely or partially unfolded, thereby moving towards a more flattened shape. A stacked portion refers to a sleeve wall part wherein at least two layers are present, stacked on top of one another and movable with respect to one another. Typically, the stacked layers are not connected to one another, such that they may be moved away from one another, thereby creating a gap in the sleeve wall.

Optionally, the sleeve wall comprises one or more stacked portions, wherein a stacked portion comprises overlapping edges, thereby allowing for the expansion of the sleeve wall due to the overlapping edges being slid with respect to each other. Thus, in unexpanded condition, the edges are overlapping, wherein their ends are not connected. During the expansion, the edges are slid with respect to one another, thereby moving the edges apart. For example, under a large expansion a gap may arise between the edges that were originally overlapping.

Optionally, the sleeve wall comprises one or more elastic or resilient portions, and one or more folded or stacked portions.

Optionally, the core sleeve is expandable in such a way that it allows for an expansion wherein, for at least one pair of opposite wall parts, the mutual distance is increased during the expansion, due to the remaining wall parts each comprising an elastic or resilient material, and/or the remaining wall parts each comprising a folded or stacked portion. The sleeve wall comprises a front part, a back part and two opposite side parts, wherein in mounted condition of the machine, the front part respectively back part is directed to the inner respectively outer circumference of the stator, and each of the side parts is directed to an adjacent stator element. In an embodiment, the front part, back part, first side part and second side part each comprise an elastic or resilient portion, or each comprise a folded or stacked portion. In another embodiment, the front part and back part each comprise an elastic or resilient portion, or each comprise a folded or stacked portion. In this case, the first and second side part move apart during the expansion. In yet another embodiment, the first side part and second side part each comprise an elastic or resilient portion, or each comprise a folded or stacked portion. In this case, the front part and back part move apart during the expansion. Also combinations of the aforementioned embodiments are possible, e.g. wherein two opposite wall parts comprise a resilient or elastic portion, and the other two opposite wall parts comprise a stacked or folded portion. Also a combination wherein a wall part comprises a resilient or elastic portion as well as a folded or stacked portion is possible.

Optionally, the front part and the back part of the sleeve wall each comprise a resilient portion of which the shape according to a transverse section is rippled, the rippled resilient portions acting as wave springs during insertion of the core part.

Optionally, the front part and the back part of the sleeve wall each comprise overlapping edges, such that the overlapping edges are slid with respect to each other during insertion of the core part.

Optionally, the one or more core parts consist of a first core part and a second core part, adapted for together composing a ferromagnetic core, and composing the stator element comprises:
- inserting the first core part with its bottom side into the internal space of the core sleeve from a first side, wherein one or more lateral faces of the first core part engage with a first portion of the sleeve wall during insertion, thereby expanding the core sleeve and pressing the first portion of the sleeve wall against the coil;
- inserting the second core part with its bottom side into the internal space of the core sleeve from a second side opposite to the first side, wherein one or more lateral faces of the second core part engage with a second portion of the sleeve wall during insertion, thereby expanding the core sleeve and pressing the second portion of the sleeve wall against the coil, and
- connecting the first and second core part, thereby obtaining the composed ferromagnetic core,
such that in the composed stator element, the coil and the core sleeve are fixed in place with respect to the ferromagnetic core.

This implies that before assembly, every core is split into two parts. During composition of a stator element, each core part is inserted from another end of the sleeve. Typically, after inserting both core parts, the coil is clamped by the expanded core sleeve, over its full length.

Optionally, the sleeve wall comprises a first tapered portion, for which the area of the enclosed space according to a transverse section continuously decreases in longitudinal direction, starting from the first sleeve end towards the second sleeve end. The tapering thus runs from the first to the second sleeve end, but does not necessarily reaches the second end. In other words, the tapering may extend over the whole length of the sleeve, or only over a portion of the length. For example, the first tapered portion is implemented as a sleeve wall portion having sloped inner surface, or a sleeve wall portion having a variable thickness. During insertion of the first core part, the tapered portion of the core part engages with the first tapered portion of the sleeve wall. In a preferred embodiment, the tapering of the sleeve matches the tapering of the core part. In an embodiment wherein the core bar is not split in parts but is provided as a unity, typically, the transverse section of the core bar is continuously decreasing in a length direction, while in that same direction, also the enclosed area of the sleeve wall continuously decreases. For example, in composed condition of the stator element, the thickest part of the sleeve wall engages with the thinnest part of the core bar.

Optionally, the sleeve wall comprises a first tapered portion and a second tapered portion. For the first respectively second tapered portion, the area of the enclosed space according to a transverse section continuously decreases in longitudinal direction, starting from the first respectively second sleeve end towards the second respectively first sleeve end. The tapering of the second tapered portion thus runs from the second to the first sleeve end, but does not reach the first end; instead, at a certain length position, the decreasing enclosed area of the second portion runs into the increasing enclosed area of the first portion. For example, the tapered portions may be implemented as sleeve wall portions both having a sloped inner surface and a non-sloped outer surface, such that the sleeve wall, over its length, has a variable thickness which first increases and then decreases again. During insertion of a first core part, the tapered portion of the core part engages with the first tapered portion of the sleeve wall; during insertion of a second core part, the tapered portion of the core part engages with the second tapered portion of the sleeve wall. In a preferred embodiment, the tapering of the respective sleeve portions matches the tapering of the respective core parts. For example, in composed condition of the stator element, the thickest part of the sleeve wall engages with the thinnest part of the core bar, located at half length of the composed core bar.

Optionally, for any of the core parts, the core part is tapered due to one or more lateral faces each comprising an inclined surface, the respective inclined surfaces each having a slope with respect to the longitudinal direction of the core part. Moreover, the one or two tapered portions of the sleeve wall each comprise one or more inclined surfaces positioned at the inner side of the sleeve wall, the respective inclined surfaces each having a slope with respect to the longitudinal direction of the sleeve. During insertion of a core part, an inclined surface of the core part engages with a corresponding inclined surface of the sleeve wall. In this, the corresponding inclined surfaces of the core part and sleeve have the same slope. Thus, the tapering of the core matches the tapering of the sleeve, thereby allowing for an easy and damage-free insertion of the core part(s), while obtaining a reliable fixation of the sleeve with respect to the core.

Optionally, the lateral faces of the core part comprise a first face, a second face, a third face and a fourth face, wherein in mounted condition of the machine, the first respectively third face is directed to the inner respectively outer circumference of the stator, and the second and fourth face each are directed to an adjacent stator element, and during insertion of the core part, the second and fourth face engage with the sleeve wall, thereby expanding the sleeve sideways. Thus, the sleeve expansion is due to the opposite side parts of the sleeve wall being pushed apart, while the front and back part of the sleeve wall are not pushed apart.

Optionally, the lateral faces of the core part comprise a first face, a second face, a third face and a fourth face, wherein in mounted condition of the machine, the first respectively third face is directed to the inner respectively outer circumference of the stator, and the second and fourth face each are directed to an adjacent stator element, the width of the core part corresponding to the mutual distance between the second and fourth face, and the depth of the core part corresponding to the mutual distance between the first and third face, and the core part is tapered due to, starting from the bottom side, the width of the core part being continuously increasing towards the top side, at least over a portion of the length, while the depth of the core part remains constant over this portion of the length. This implies that the tapering of the core part is only implemented via an inclined second and fourth face, while the first and third face are not inclined and do not contribute to the tapering of the core part.

Optionally, the sleeve wall comprises a front part, a back part and two opposite side parts, wherein in mounted condition of the machine, the front part respectively back part is directed to the inner respectively outer circumference of the stator, and each of the side parts is directed to an adjacent stator element, and for any tapered portion of the sleeve wall, the width of the enclosed space continuously decreases in a longitudinal direction, towards the middle of the sleeve, while the depth of the enclosed space remains constant, the width corresponding to the distance between the two opposite side parts and the depth corresponding to the distance between the front part and the back part. This implies that the tapering of the sleeve is only implemented via an adapted design of the side parts of the sleeve wall, while the front and back part of the sleeve wall do not contribute to the tapering of the respective sleeve portions.

Optionally, for any of the one or more core parts:
- the core part is made of ferromagnetic material, the ferromagnetic core part being tapered,
   or
- the core part comprises a portion made of ferromagnetic material and an additional layer of a material other than the ferromagnetic material, the additional layer being applied to the ferromagnetic portion and defining the tapered shape of the core part.

Optionally, the one or more core parts consist of one or two core parts, wherein any of the one or two core parts comprises a pole shoe connected to a bar element, the free end of the bar element corresponding to the bottom side of the core part, and the free end of the pole shoe corresponding to the top side of the core part, and the bar element being tapered such that, starting from the free end of the bar element, the area of a transverse cross section continuously increases towards the pole shoe, over the full length of the bar element.

Optionally, the method further comprises:
- providing an inner circumferential wall, an outer circumferential wall, a top cover and a bottom cover, adapted for composing a clamshell structure;
- composing the multiple stator elements;
- obtaining a composed clamshell structure, wherein the inner and outer circumferential wall are positioned coaxially, and both circumferential walls extend in axial direction, between the top cover and the bottom cover;
- obtaining a stator structure, wherein the composed stator elements are encompassed by the composed clamshell structure.
According to various embodiments, the order of the aforementioned method staps may be different. Moreover, according to various embodiments, steps for composing the stator elements may be alternated with steps for composing the clamshell structure.

Optionally, the method comprises:
- providing a first portion of the clamshell structure, comprising the inner circumferential wall, the outer circumferential wall and the bottom cover, the bottom cover comprising holes;
- positioning coils between the inner and outer circumferential wall, the coils being positioned with their central axis according to the axial direction.
- positioning core sleeves, the core sleeves being positioned with their longitudinal direction corresponding to the axial direction, and each of the core sleeves being placed inside a respective coil;
- placing the top cover on top of the circumferential walls, thereby obtaining the composed clamshell structure, the top cover comprising holes;
- composing the multiple stator elements, wherein for each of the stator elements, any of the one or more core parts is inserted through a respective hole of the top or bottom cover while being inserted into the internal space of the corresponding core sleeve.

Optionally, for any of the stator elements, the one or more core parts consist of two core parts, the first and second core part each comprising a pole shoe connected to a bar element, and the method comprises, for each of the stator elements:
- inserting the bar element of the first core part through a respective hole of the top cover while being inserted into the internal space of the corresponding core sleeve, until the pole shoe of the first core part is positioned in the respective hole of the top cover;
- inserting the bar element of the second core part through a respective hole of the bottom cover while being inserted into the internal space of the corresponding core sleeve, until the pole shoe of the second core part is positioned in the respective hole of the bottom cover;
- connecting the bar element of the first and second core part.

According to a second aspect of the present invention, the above identified objectives are realized by a stator for an axial flux machine, defined by claim 15, the stator comprising:
- a central axis in axial direction corresponding to the rotational axis of the axial flux machine when mounted;
- a plurality of stator elements, being arranged rotational symmetrically around the central axis, wherein each of the stator elements comprises:
   ∘ a core at least partially made of ferromagnetic material, the core being composed of one or more core parts, any of the one or more core parts extending according to the axial direction between a top side and bottom side, the top side corresponding to an end of the core;
   ∘ a coil, comprising a plurality of turns wound around the core, the coil having a central axis according to the axial direction;
   ∘ a core sleeve, placed between the core and the coil, the core sleeve comprising a sleeve wall extending according to the axial direction;
- a clamshell structure encompassing the stator elements, the clamshell structure comprising a top cover, a bottom cover, an inner circumferential wall, and an outer circumferential wall, the circumferential walls extending between the top and bottom cover,
wherein for any of the stator elements:
- any of the one or more core parts is tapered, wherein, starting from the bottom side, the transverse cross section of the core part continuously increases towards the top side, at least over a portion of the length of the core part;
- the core sleeve is in an expanded condition, wherein
   ∘ the core is clamped inside the sleeve wall, and
   ∘ the sleeve is expanded due to the core being positioned inside the sleeve wall, the sleeve wall being pressed against the coil and the coil being clamped by the expanded core sleeve.

### Brief Description of the Drawings

Fig. 1 and Fig. 2 show a core sleeve, for use in a method according to a first embodiment of the invention.
Fig. 3 and Fig. 4 show a core sleeve, for use in a method according to a second embodiment of the invention.
Fig. 5 illustrates two core parts, for use in a method according to an embodiment of the invention.
Fig. 6 to Fig. 9 illustrate subsequent steps for composing a stator element, comprised in a method according to an embodiment of the invention.
Fig. 10 to Fig. 12 illustrate subsequent steps for assembling a stator, according to an embodiment of the invention.

### Detailed Description of Embodiment(s)

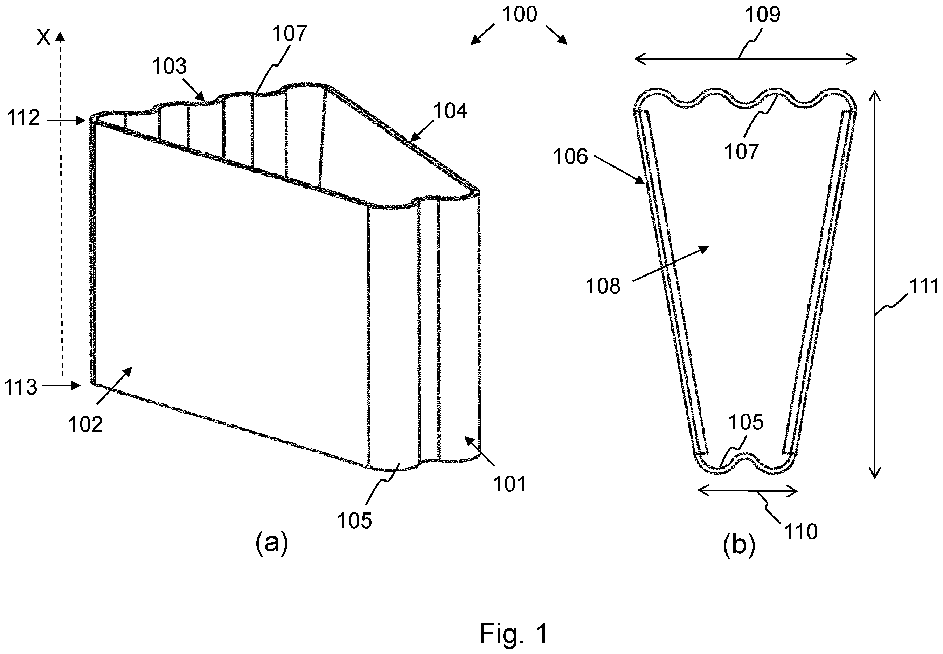

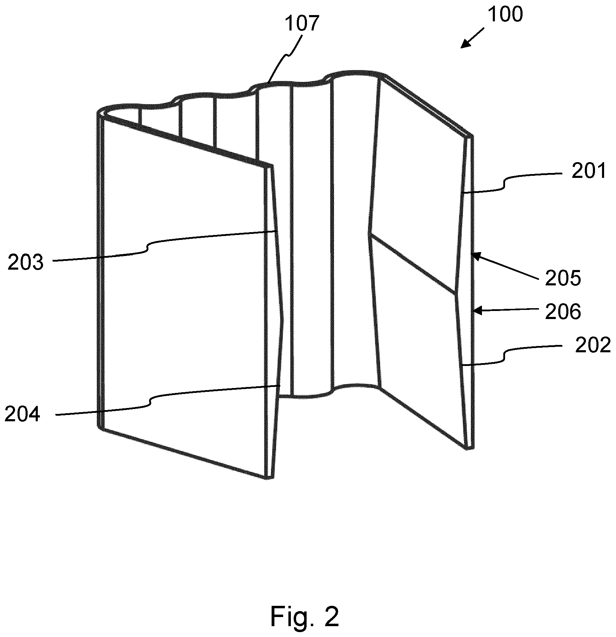

Fig. 1 and Fig. 2 show a core sleeve 100, for use in a method according to a first embodiment of the invention. Fig. 1(a) gives a 3D-view of the core sleeve 100, and Fig. 1(b) a transverse cross section. The sleeve 100 comprises a sleeve wall 106, which encloses an internal space 108. The sleeve wall 106 extends according to a longitudinal direction indicated as `X', between a second end 113 and a first end 112. The sleeve wall 106 comprises a front part 101, a back part 103 and two opposite side parts 102, 104. The mutual distance between the side parts 102, 104 corresponds to the width of the sleeve 100. Fig. 1(b) shows that the width varies between a minimal width 110 and a maximal width 109. The mutual distance between the front part 101 and the back part 103 corresponds to the depth 111 of the sleeve 100.

In the embodiment of Fig. 1, the sleeve wall 106 comprises two resilient portions 105, 107, located in the front part 101 and back part 103 of the sleeve wall respectively. According to a transverse section, as shown in Fig. 1(b), the shape of the two resilient portions 105, 107 is rippled, such that the sleeve wall portions 105, 107 are designed as wave springs. In the shown embodiment, the rippled resilient portions 105, 107 extend over the complete length of the sleeve wall 106. Due to the presence of the resilient portions 105, 107, the core sleeve 100 is expandable. Indeed, the sleeve wall 106 allows for an expansion wherein the transverse cross section of the internal space 108 is enlarged. In particular, as the resilient portion 105, 107 can be stretched according to the width direction, the sleeve wall 106 allows for a sideways expansion wherein the mutual distance between the two side parts 102, 104 is increased. In other words, during the expansion the width 107, 110 of the sleeve 100 is increased, while the depth 111 remains constant. A similar effect could be obtained with other variants, e.g. wherein the wave springs 105, 107 are replaced with sleeve wall portions made of an elastic material, or wherein the rippled portions 105, 107 are not resilient but provided as material folded according an accordion fold.

In Fig. 2 a longitudinal section of the sleeve wall 106 is shown. The figure shows that the sleeve wall 106 comprises a first tapered portion 205 and a second tapered portion 206. The tapered portions 205, 206 are such that the area of the enclosed space 108 first decreases, from the first sleeve end 112 until the middle of the sleeve, and next increases, from the middle of the sleeve to the second sleeve end 113. In the shown embodiment, the tapering is obtained due to the side part 102 having inclined inner surfaces 203, 204, being inclined with respect to the longitudinal direction X, and a non-inclined outer surface, being parallel to the longitudinal direction X. Analogously, the side part 104 has inclined inner surfaces 201, 202 and a non-inclined outer surface. In other words, the two side parts 102, 104 of the sleeve wall 106 each have a variable thickness, which, according to the longitudinal direction X first increases and then decreases.

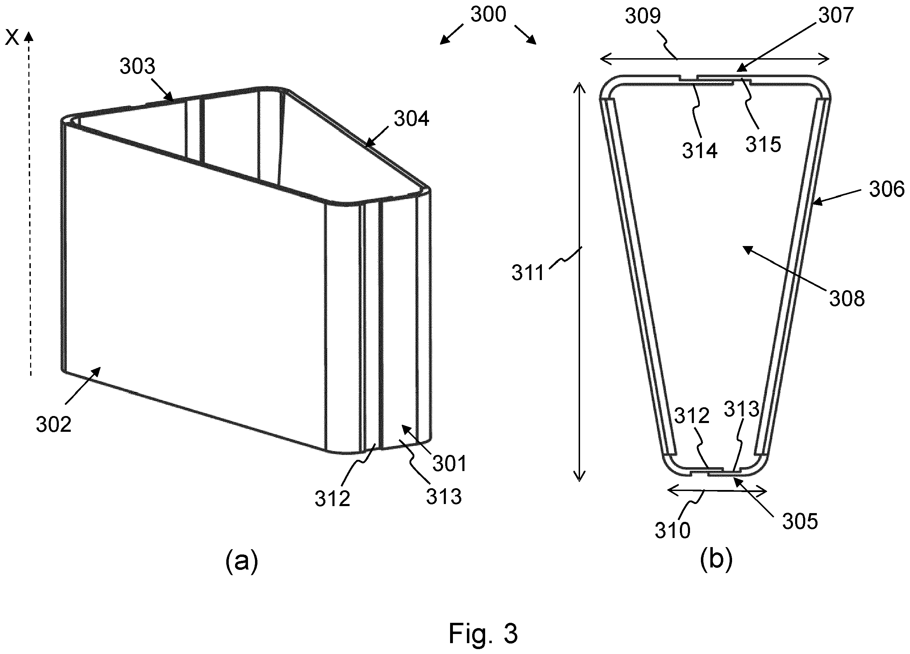

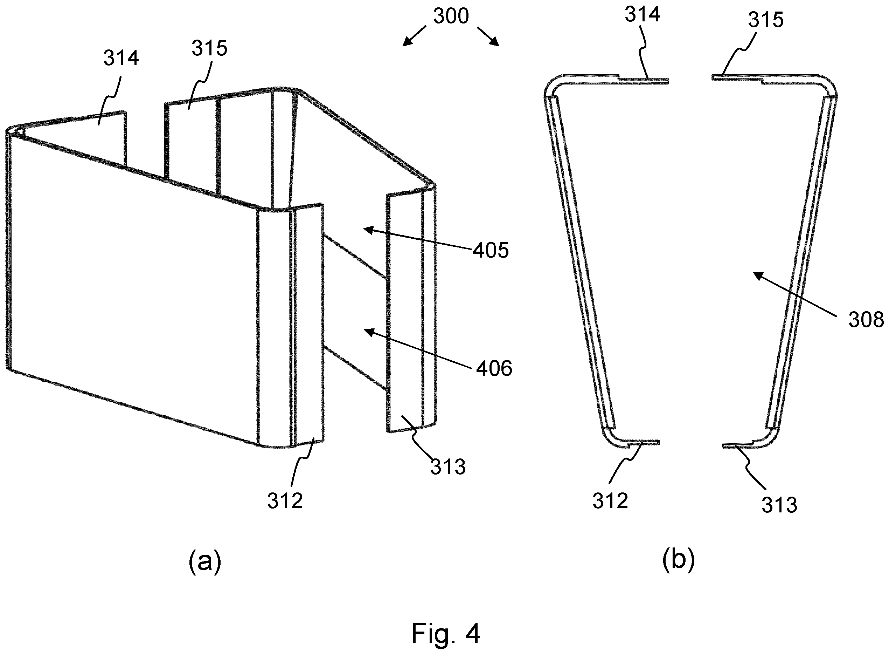

Fig. 3 and Fig. 4 illustrate another embodiment of a core sleeve 300. Fig. 3(a) gives a 3D-view of the core sleeve 300, and Fig. 3(b) a transverse cross section. The sleeve 300 comprises a sleeve wall 306, which encloses an internal space 308. The sleeve wall 306 extends according to a longitudinal direction indicated as 'X'. The sleeve wall 306 comprises a front part 301, a back part 303 and two opposite side parts 302, 304. The mutual distance between the side parts 302, 304 corresponds to the width of the sleeve 300. Fig. 3(b) shows that the width varies between a minimal width 310 and a maximal width 309. The mutual distance between the front part 301 and the back part 303 corresponds to the depth 311 of the sleeve 300.

In the embodiment of Fig. 3, the sleeve wall 306 comprises two stacked portions 305, 307. Each of the stacked portions 305, 307 comprises two layers, stacked on top of one another and movable with respect to one another. In particular, the first stacked portion 305 comprises two overlapping edges 312, 313, of which the ends are not connected. The second stacked portion 307 comprises two overlapping edges 314, 315, of which the ends are not connected. Due to the presence of the stacked portions 305, 307, the core sleeve 300 is expandable. Indeed, the sleeve wall 306 allows for an expansion wherein the transverse cross section of the internal space 308 is enlarged, wherein during such expansion the overlapping edges 312 and 313 are slid with respect to each other and the overlapping edges 314, 315 are slid with respect to each other. Thus, the sleeve wall 306 allows for a sideway expansion wherein the mutual distance between the two side parts 102, 104 is increased, as is illustrated in Fig. 4. In other words, during the expansion the width 307, 310 of the sleeve 300 is increased, while the depth 311 remains constant. Fig. 4 shows that, as the overlapping edges are not connected, the sleeve wall 306 is composed of two separate parts, such that - in case a substantial expansion would be applied - a gap is created between the two separate parts. A similar expansion could be obtained with other variants, e.g. wherein the edges 312 and 313 are connected and the edges 314 and 315 are connected, thereby forming two zig-zag folds that are unfolded during an expansion.

Fig. 4 shows that the sleeve 300 comprises a first tapered portion 405 and a second tapered portion 406. Similar to the first embodiment illustrated in Fig. 2, the tapering is obtained by inclined internal surfaces of the side parts 302, 304. Due to these tapered portions 405, 406, the area of the enclosed space 308 first decreases, from the first sleeve end until the middle of the sleeve, and next increases, from the middle of the sleeve to the second sleeve end.

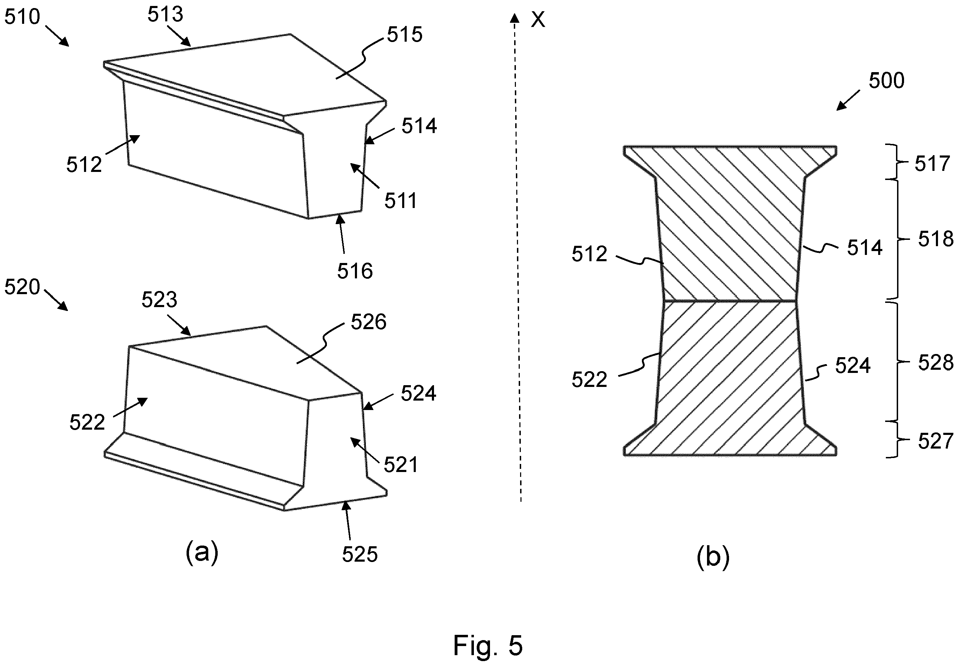

Fig. 5(a) shows two core parts 510, 520 and Fig. 5(b) shows a composed core 500, extending according to a longitudinal direction X. Both core parts 510, 520 are made of a ferromagnetic material. The first core part 510 comprises a pole shoe 517 connected to a bar element 518, and the second core part 520 comprises a pole shoe 527 connected to a bar element 528. In the composed core 500, the bar elements 517 and 518 together form a core bar. The first core part 510 comprises four lateral faces: a first face 511, a second face 512, a third face 513 and a fourth face 514. Moreover, the first core part 510 comprises a top side 515 and a bottom side 516. The second core part 520 comprises four lateral faces: a first face 521, a second face 522, a third face 523 and a fourth face 524. Moreover, the second core part 520 comprises a top side 525 and a bottom side 526. In the composed core 500, the respective bottom sides 516 and 526 are in contact.

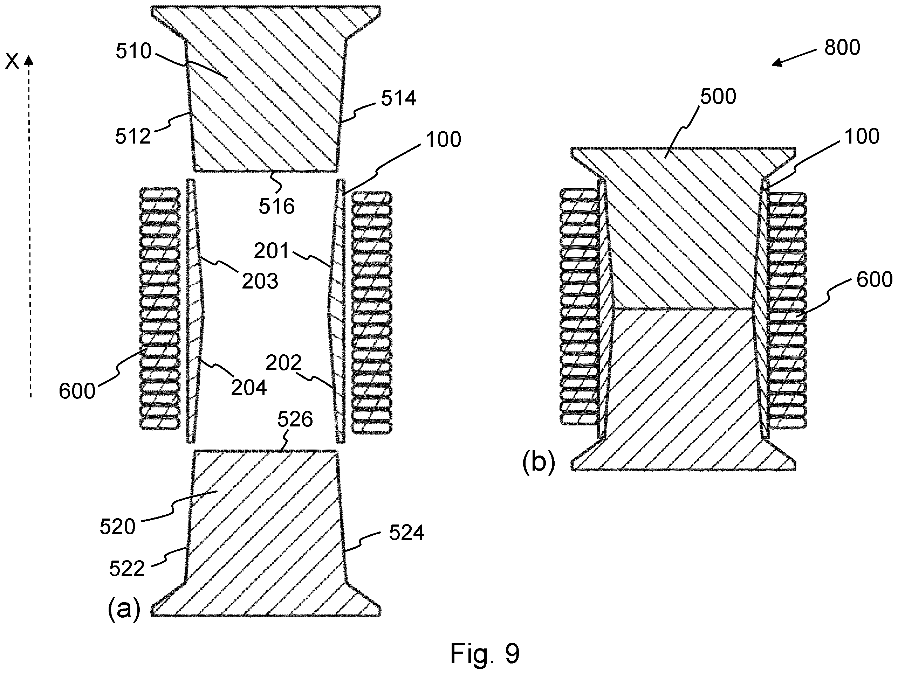

The first core part 510 and second core part 520 both are tapered, wherein, starting from the bottom side 516, 526, the transverse cross section of the bar element 518, 528 continuously increases towards the top side 515, 525, until the pole shoe 517, 527 is reached. The tapering is obtained due to both the second face 512, 522 and fourth face 514, 524 comprising an inclined surface, having a slope with respect to the longitudinal direction X. The tapering of the first core part 510 is such that the inclined surfaces 512 resp. 514 have the same slope as the slope of the inclined inner surfaces 203 resp. 201 of the first tapered portion 205 of the sleeve 100. The tapering of the second core part 520 is such that the inclined surfaces 522 resp. 524 have the same slope as the slope of the inclined inner surfaces 204 resp. 202 of the second tapered portion 206 of the sleeve 100. The corresponding tapering of the respective core parts and the sleeve wall is also visible on Fig. 9.

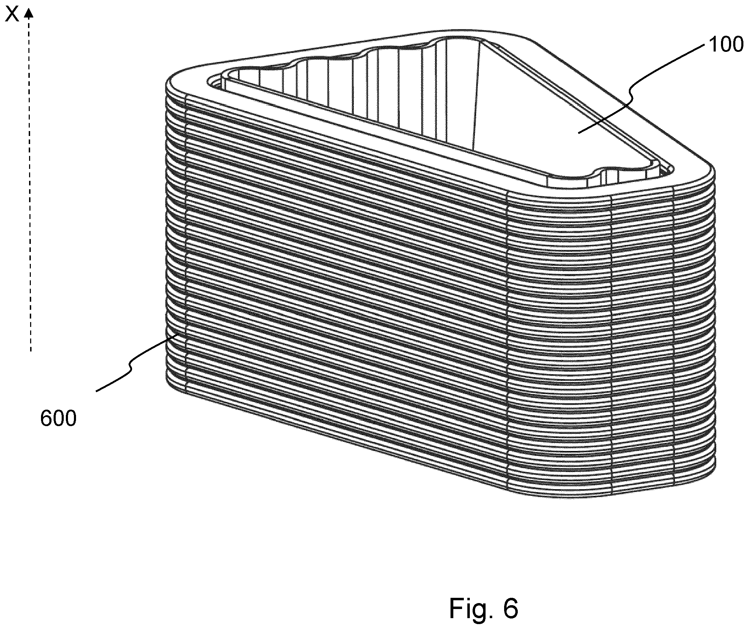

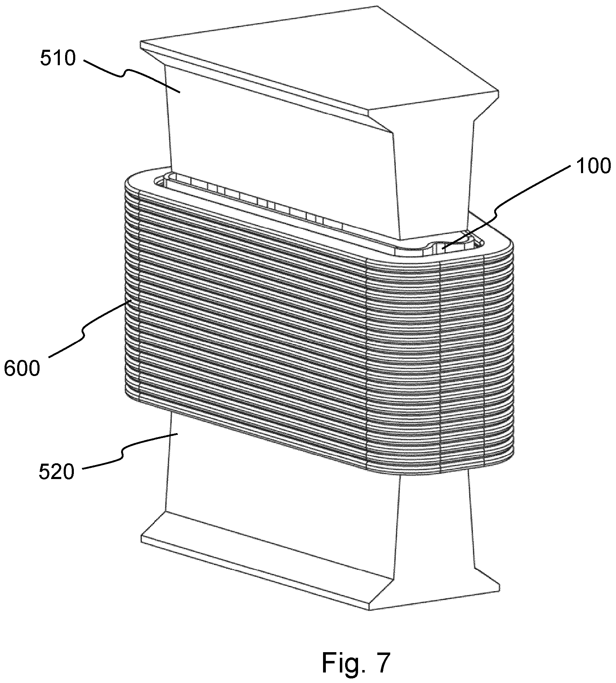

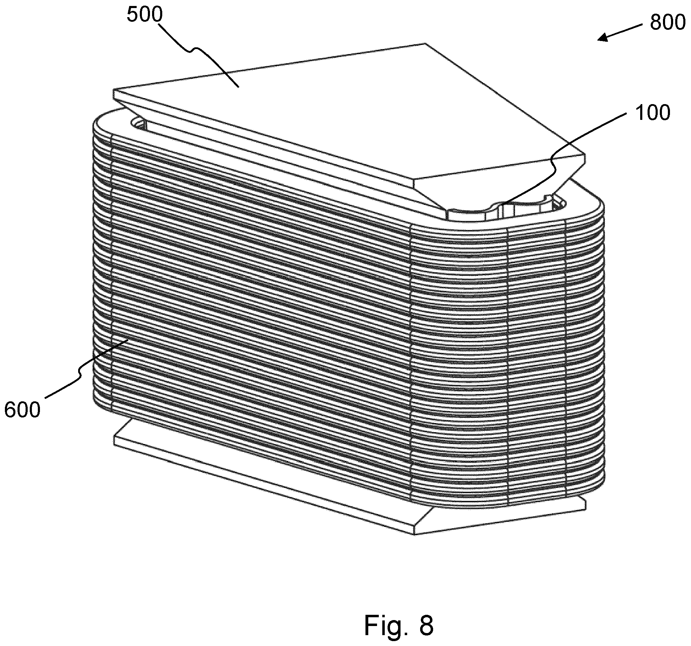

Fig. 6 to 8 illustrate subsequent steps for composing a stator element 800. First a coil 600 is provided, having multiple turns, the coil 600 extending according to the longitudinal direction X. Next, a core sleeve, e.g. the sleeve 100 of Fig. 1, is positioned inside the coil 600, as is shown in Fig. 6. Fig. 7 shows that in a subsequent step, the first core part 510 is inserted with its bottom side 516 into the internal space 108 of the sleeve 100 from the first side 112, and the second core part 520 is inserted with its bottom side 526 into the internal space 108 of the sleeve 100 from the second side 113. Fig. 8 shows that the core parts 510 and 520 are moved until their respective bottom sides 516, 526 come in contact, thereby forming the composed core 500 and obtaining the composed stator element 800. Typically, the bottom sides 516, 526 of the core parts 510, 520 are connected, e.g. by means of glue, a press fit joint, a snap fit joint, a or another type of connection.

The aforementioned steps for composing the stator element 800 are also illustrated in the cross section of Fig. 9. Fig. 9(a) corresponds to the state before inserting the core parts, and Fig. 9(b) illustrates the obtained stator element 800. As the tapering of the respective core parts 510, 520 matches the tapering of the sleeve, the core parts may easily be inserted into the sleeve, without causing any damage to the sleeve wall. While inserting the first core part 510 into the sleeve 100, the lateral faces 511-514 engage with the inner side of the first portion 205 of the sleeve wall 106. Due to the resilient rippled portions 105, 107 acting as wave springs, the first portion 205 of the sleeve wall 106 is expanded sideways. Accordingly, the first portion 205 of the sleeve wall 106 is pressed against the inner side of the coil 600. While inserting the second core part 520 into the sleeve 100, the lateral faces 521-524 engage with the second portion 206 of the sleeve wall 106. Due to the resilient rippled portions 105, 107 acting as a wave spring, the second portion 206 of the sleeve wall 106 is expanded sideways. Accordingly, the second portion 206 of the sleeve wall 106 is pressed against the inner side of the coil 600. After inserting the two core parts 510, 520, the coil 600 is clamped by the expanded core sleeve 100, such that in the composed stator element 800, the coil 600 and the core sleeve 100 are fixed in place with respect to the ferromagnetic core 500.

Similar steps may be applied for composing a stator element when using another embodiment of the core sleeve, e.g. the embodiment of Fig. 3. In this case, when inserting the core parts 510 and 520 into the sleeve 300, the sleeve 300 is expanded wherein the edge 315 slides over the edge 314 and the edge 313 slides over the edge 312, thereby moving the side parts 302 and 304 apart.

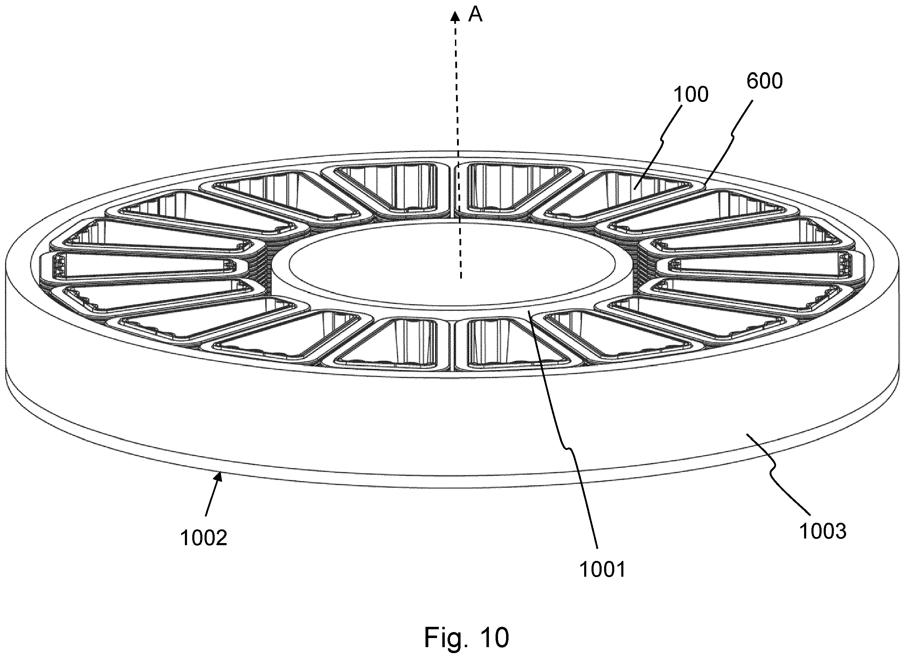

Fig. 10 to Fig. 12 illustrate subsequent steps for assembling a stator 1200. The stator 1200 is suitable for use in an axial flux machine. The axial direction of the stator, when used in the axial flux machine, is indicated with 'A'. First, as shown in Fig. 10, a first portion of a clamshell structure is provided, this first portion comprising an inner circumferential wall 1001, an outer circumferential wall 1003, and a bottom cover 1200. The two circumferential walls 1001 and 1003 are positioned coaxially. The bottom cover 1200 is disk-shaped and comprises a central opening, thereby connecting the outer 1003 to the inner circumferential wall 1001. Furthermore, the bottom cover 1200 comprises holes adapted for receiving a bar element of a core part, the holes not being visible on the figure. Next, coils 600 are positioned inside the first portion of the clamshell structure, in a rotational symmetrical way, and a sleeve 100 is positioned inside each of the coils 600. In other embodiments of the method, other embodiments of the sleeve may be used. The coils 600 and sleeves 100 are positioned such that their longitudinal direction X, corresponds to the axial direction A of the stator.

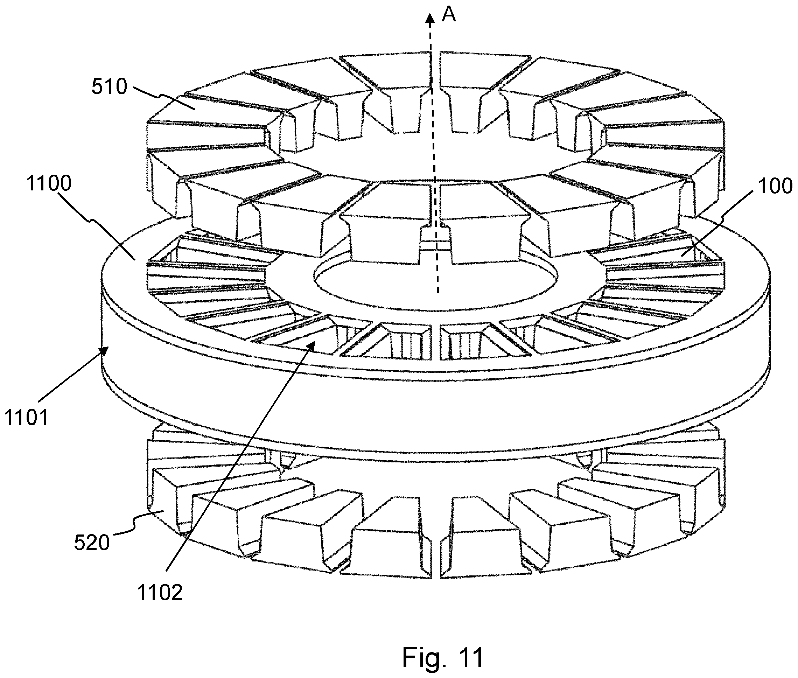

In a next step, as illustrated in Fig. 11, a top cover 1100 is placed on top of the circumferential walls 1001, 1003, thereby obtaining the composed clamshell structure 1101. The top cover 1100 comprises holes 1102, adapted for receiving bar elements of a core part. Next, core parts 510 are inserted with their bottom side 516 into the respective sleeves 100, via the holes 1102 in the top cover 1100, and core parts 520 are inserted with their bottom side 526 into the respective sleeves 100, via the holes in the bottom cover 1002. During insertion of the core parts 510, 520, the respective sleeves 100 are expanded, such that the corresponding coils 600 are clamped by the respective sleeves 100. For any pair of core parts 510, 520, the respective bottom sides 516, 526 are connected, e.g. by means of glue, a press fit joint, a snap fit joint, a or another type of connection.

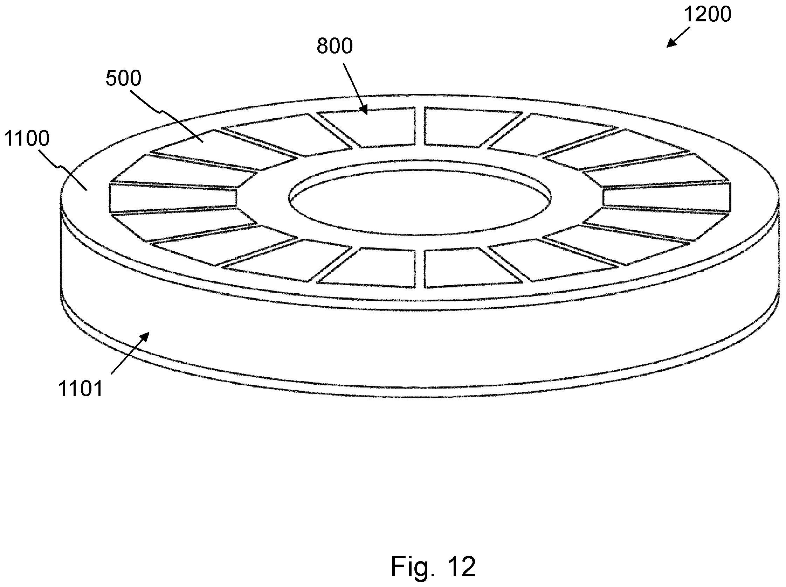

Fig. 12 shows that the core parts 510, 520 are inserted until their top surface 515, 525 aligns with the top surface of respectively the top cover 1100 and bottom cover 1002. This results in the stator 1200, comprising the composed stator elements 800 encompassed by the clamshell structure 1101. As the cores 500 are fixed with respect to the clamshell structure 1101, and the coils 600 are clamped by the sleeves 100, the coils 600 are prevented from vibrating or moving inside the clamshell 1101.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for assembling a stator (1200) of an axial flux machine, the method comprising composing multiple stator elements (800), wherein composing a stator element (800) comprises:
- providing a coil (600), the coil (600) having a central axis according to a longitudinal direction;
- providing one or more core parts (510, 520), adapted for composing a ferromagnetic core (500), wherein any of the one or more core parts (510, 520) extends according to a longitudinal direction between a top side (515) and bottom side (516);
- providing a core sleeve (100), the core sleeve (100) comprising a sleeve wall (106) enclosing an internal space (108), the sleeve wall (106) extending according to a longitudinal direction,
wherein the longitudinal direction of the coil (600), of the sleeve (100) and of the one or more core parts (510, 520) corresponds to the axial direction of the machine when mounted, and wherein:
- any of the one or more core parts (510, 520) is tapered, wherein, starting from the bottom side (516), the transverse cross section of the core part continuously increases towards the top side (515), at least over a portion of the length of the core part;
- the core sleeve (100) is expandable, such that the sleeve wall (106) allows for an expansion wherein the transverse cross section of the enclosed internal space (108) is enlarged, at least over a portion of the length of the core sleeve (100),
and composing the stator element (800) further comprises:
- positioning the coil (600) and the core sleeve (100), wherein the core sleeve (100) is placed inside the coil (600);
- for each of the one or more core parts (510, 520): inserting the core part (510) with its bottom side (516) into the internal space (108) of the core sleeve (100), wherein one or more lateral faces (511, 512, 513, 514) of the core part (510) engage with the sleeve wall (106) during insertion, thereby expanding the core sleeve (100) and pressing the sleeve wall (106) against the coil (600),
such that after inserting the one or more core parts (510, 520), the coil (600) is clamped by the expanded core sleeve (100).

2. Method according to claim 1,
wherein the sleeve wall (106) is at least partially elastic or resilient, thereby allowing for the expansion of the core sleeve (100) when inserting the core part (510).

3. Method according to any of the preceding claims,
wherein the sleeve wall (106) comprises one or more resilient portions (105, 107), of which the shape according to a transverse section is rippled, the rippled resilient portion (105, 107) acting as a wave spring during insertion of the core part (510).

4. Method according to any of the preceding claims,
wherein the sleeve wall (306) comprises one or more folded or stacked portions (305, 307), thereby allowing for the expansion of the core sleeve (300) when inserting the core part (510).

5. Method according to any of the preceding claims,
wherein the sleeve wall (306) comprises one or more stacked portions (305, 307),
wherein a stacked portion (305) comprises overlapping edges (312, 313), thereby allowing for the expansion of the sleeve wall (306) due to the overlapping edges (312, 313) being slid with respect to each other.

6. Method according to any of the preceding claims,
wherein the sleeve wall (106) comprises a front part (101), a back part (103) and two opposite side parts (102, 104), wherein in mounted condition of the machine, the front part (101) respectively back part (103) is directed to the inner respectively outer circumference of the stator, and each of the side parts (102, 104) is directed to an adjacent stator element,
and wherein the core sleeve (100) is expandable in such a way that it allows for an expansion wherein for at least one pair of opposite wall parts (102, 104) the mutual distance is increased during the expansion, due to the remaining wall parts (101, 103) each comprising an elastic or resilient material, and/or the remaining wall parts (301, 303) each comprising a folded or stacked portion.

7. Method according to any of the preceding claims,
wherein the one or more core parts consist of a first core part (510) and a second core part (520), adapted for together composing a ferromagnetic core (500), and wherein composing the stator element (800) comprises:
- inserting the first core part (510) with its bottom side (516) into the internal space (108) of the core sleeve (100) from a first side (112), wherein one or more lateral faces of the first core part (510) engage with a first portion (205) of the sleeve wall (106) during insertion, thereby expanding the core sleeve (100) and pressing the first portion (205) of the sleeve wall (106) against the coil (600);
- inserting the second core part (520) with its bottom side (526) into the internal space (108) of the core sleeve (100) from a second side (113) opposite to the first side, wherein one or more lateral faces of the second core part (520) engage with a second portion (206) of the sleeve wall (106) during insertion, thereby expanding the core sleeve (100) and pressing the second portion (206) of the sleeve wall (106) against the coil (600), and
- connecting the first (510) and second core part (520), thereby obtaining the composed ferromagnetic core (500),
such that in the composed stator element (800), the coil (600) and the core sleeve (100) are fixed in place with respect to the ferromagnetic core (500).

8. Method according to any of the preceding claims,
wherein the sleeve wall (106) comprises a first tapered portion (205), for which the area of the enclosed space (108) according to a transverse section continuously decreases in longitudinal direction, starting from the first sleeve end (112) towards the second sleeve end (113).

9. Method according to claim 8,
wherein the sleeve wall (106) comprises a second tapered portion (206), for which the area of the enclosed space (108) according to a transverse section continuously decreases in longitudinal direction, starting from the second sleeve end (113) towards the first sleeve end (112).

10. Method according to claim 8 or 9,
wherein, for any of the core parts (510, 520), the core part (510) is tapered due to one or more lateral faces (512, 514) each comprising an inclined surface, the respective inclined surfaces each having a slope with respect to the longitudinal direction of the core part (510),
and the one or two tapered portions (205, 206) of the sleeve wall (106) each comprise one or more inclined surfaces (201, 202) positioned at the inner side of the sleeve wall (106), the respective inclined surfaces (201, 202) each having a slope with respect to the longitudinal direction of the sleeve,
wherein an inclined surface (514) of the core part (520) engages with a corresponding inclined surface (201) of the sleeve wall (106) during insertion of the core part (510),
and wherein corresponding inclined surfaces of the core part (510) and sleeve (100) have the same slope.

11. Method according to any of the preceding claims,
wherein the lateral faces of the core part (510) comprise a first face (511), a second face (512), a third face (513) and a fourth face (514), wherein in mounted condition of the machine, the first (510) respectively third face (513) is directed to the inner respectively outer circumference of the stator (1200), and the second (512) and fourth face (514) each are directed to an adjacent stator element (800),
and wherein during insertion of the core part (510), the second (512) and fourth face (514) engage with the sleeve wall (106), thereby expanding the sleeve (100) sideways.

12. Method according to any of the preceding claims,
wherein the one or more core parts consist of one or two core parts (510, 520), wherein any of the one or two core parts comprises a pole shoe (517) connected to a bar element (518), the free end of the bar element (518) corresponding to the bottom side (516) of the core part (510), and the free end of the pole shoe (517) corresponding to the top side (515) of the core part (510), and the bar element (518) being tapered such that, starting from the free end of the bar element (518), the area of a transverse cross section continuously increases towards the pole shoe (517), over the full length of the bar element (518).

13. Method according to any of the preceding claims,
the method further comprising:
- providing an inner circumferential wall (1001), an outer circumferential wall (1003), a top cover (1100) and a bottom cover (1002), adapted for composing a clamshell structure (1101);
- composing the multiple stator elements (800);
- obtaining a composed clamshell structure (1101), wherein the inner (1001) and outer circumferential wall (1003) are positioned coaxially, and both circumferential walls (1001, 1003) extend in axial direction, between the top cover (1100) and the bottom cover (1002);
- obtaining a stator structure (1200), wherein the composed stator elements (800) are encompassed by the composed clamshell structure (1101).

14. Method according to claim 13,
wherein the method comprises:
- providing a first portion of the clamshell structure (1101), comprising the inner circumferential wall (1001), the outer circumferential wall (1003) and the bottom cover (1002), the bottom cover (1002) comprising holes;
- positioning coils (600) between the inner (1001) and outer circumferential wall (1003), the coils (600) being positioned with their central axis according to the axial direction.
- positioning core sleeves (100), the core sleeves (100) being positioned with their longitudinal direction corresponding to the axial direction, and each of the core sleeves (100) being placed inside a respective coil (600);
- placing the top cover (1100) on top of the circumferential walls (1001, 1003), thereby obtaining the composed clamshell structure (1101), the top cover (1100) comprising holes;
- composing the multiple stator elements (800), wherein for each of the stator elements (800), any of the one or more core parts (510, 520) is inserted through a respective hole of the top (1100) or bottom cover (1002) while being inserted into the internal space (108) of the corresponding core sleeve (100).

15. Stator (1200) for an axial flux machine, the stator (1200) comprising:
- a central axis in axial direction corresponding to the rotational axis of the axial flux machine when mounted;
- a plurality of stator elements (800), being arranged rotational symmetrically around the central axis, wherein each of the stator elements (800) comprises:
∘ a core (500) at least partially made of ferromagnetic material, the core (500) being composed of one or more core parts (510, 520), any of the one or more core parts (510, 520) extending according to the axial direction between a top side (515) and bottom side (516), the top side (515) corresponding to an end of the core (500);
∘ a coil (600), comprising a plurality of turns wound around the core (500), the coil (600) having a central axis according to the axial direction;
∘ a core sleeve (100), placed between the core (500) and the coil (600), the core sleeve (100) comprising a sleeve wall (106) extending according to the axial direction;
- a clamshell structure (1101) encompassing the stator elements (800), the clamshell structure (1101) comprising a top cover (1100), a bottom cover (1002), an inner circumferential wall (1001), and an outer circumferential wall (1003), the circumferential walls (1001, 1003) extending between the top (1100) and bottom cover (1002),
wherein for any of the stator elements (800):
- any of the one or more core parts (510, 520) is tapered, wherein, starting from the bottom side (516), the transverse cross section of the core part (510) continuously increases towards the top side (515), at least over a portion of the length of the core part (510);
- the core sleeve (100) is in an expanded condition, wherein
∘ the core (500) is clamped inside the sleeve wall (106), and
∘ the sleeve (100) is expanded due to the core (500) being positioned inside the sleeve wall (106), the sleeve wall (106) being pressed against the coil (600) and the coil (600) being clamped by the expanded core sleeve (100).
